(19) **Europäisches Patentamt**

**European Patent Office**

**Office européen des brevets**

(11) Publication number: **0 238 752**
**B1**

(12) **EUROPEAN PATENT SPECIFICATION**

(45) Date of publication of the patent specification:
07.02.90

(51) Int. Cl.⁴: **G11B 15/68**

(21) Application number: 86309148.4

(22) Date of filing: 24.11.86

(54) Magazine for data storage units in combination with read/write apparatus for receiving the magazine.

(30) Priority: 25.01.86 GB 8601827

(43) Date of publication of application:
30.09.87 Bulletin 87/40

(45) Publication of the grant of the patent:
07.02.90 Bulletin 90/6

(84) Designated Contracting States:
DE FR GB IT

(56) References cited:
EP-A- 0 187 024
WO-A-86/02192
CH-A- 563 643
US-A- 3 326 483
US-A- 3 453 397
US-A- 3 603 597
US-A- 3 877 075
US-A- 4 164 765

PATENT ABSTRACTS OF JAPAN, vol. 7,
no. 234 (P-230)[1379], 18th October 1983; &
JP-A-58 121 171

(73) Proprietor: Hewlett-Packard Limited, Nine Mile Ride,
Wokingham Berkshire RG11 3LL(GB)

(72) Inventor: Dimond, Steven Andrew, 9 Highfields Close,
Stoke Gifford Bristol Avon(GB)
Inventor: Escuder, Manuel Angel, 25 Squires Leaze,
Thornbury Bristol Avon(GB)

(74) Representative: Squibbs, Robert Francis,
Hewlett-Packard Limited Nine Mile Ride, Wokingham
Berkshire RG11 3LL(GB)

## Description

The present invention relates to the combination of a magazine for holding data-storage units, and apparatus arranged to receive the magazine and to write data to and/or read data from the data storage units of the magazine.

Various prior art arrangements are known in which a magazine is used to store a plurality of data storage units in order generally to facilitate the handling of the units including loading of the units into read/write apparatus.

In particular, GB-A 1 302 389 discloses a magazine for holding a vertical stack of horizontally disposed tape cartridges. The magazine is horizontally insertable into a front opening in tape record/playback apparatus. To facilitate the insertion of the magazine into the apparatus, a handle is provided on the wall of the magazine that faces outwards following the insertion operation.

A disadvantage of the arrangement described in GB-A 1 302 289 is that during insertion of the magazine into the record/playback apparatus, the weight of the magazine provides a considerable eccentric load on the hand and wrist of the user. This results in lack of control and general difficulty in the positioning and insertion of the magazine into the apparatus.

It is an object of the present invention to provide a combination of magazine and apparatus in which loading of the magazine into the apparatus is facilitated.

According to the present invention there is provided a magazine arranged to hold a plurality of data storage units, the magazine comprising a housing provided on top with a carrying handle in combination with an apparatus arranged to receive the magazine with data storage units held therein and to write data to and/or read data from the data storage units, characterised in that the apparatus includes a casing with an upright door arranged to tilt open outwardly by pivotal movement about a substantially horizontal axis lying in the region of the bottom of the door, the door when open permitting the magazine to be inserted down past the back of the door into the apparatus after the magazine has first been tilted from its normal carrying orientation.

It is noted that US-A 3 877 075 discloses a cassette recorder having an upright door which can be tilted open outwardly by pivotal movement about a substantially horizontal axis near the bottom of the door. The door, when open, permits a cassette to be inserted down past the back of the door into the recorder. However, this known loading principle relates to loading a single cassette into a recorder, whereby the weight of the cassette is of no importance.

When the magazine is being carried by its handle, the bulk of the magazine resides below the handle which is comfortable and convenient for the user. To load the magazine into the read/write apparatus simply requires the magazine to be tilted from its normal carrying position and slid down into the apparatus with very little eccentric loading of the hand and wrist of the user. This arrangement is particularly useful for apparatus intended for rackmounting where a magazine can generally only be front-loaded into the apparatus.

Advantageously, to facilitate the guiding and location of the magazine during its insertion into the read/write apparatus, the casing door is rearwardly provided with guide elements arranged to engage in guide channels externally formed on opposite sides of the magazine housing.

Preferably, correct seating of the magazine within the apparatus is achieved by the provision of locating stops on a base member of the apparatus, the magazine being arranged to seat on these stops after its insertion into the apparatus casing and closure of the casing door. Furthermore, resilient means may be provided on the casing door or body to apply a downwards force to the magazine whereby to hold the latter ahainst said locating stops. Preferably, fixed stop means are also provided for locating the magazine in an inwards direction of the apparatus; again resilient means can be positioned to urge the magazine against these stop means upon closure of the casing door. In this manner, the magazine may be located relative to a fixed part of the apparatus both vertically and horizontally.

Advantageously, the casing door and the magazine housing are provided with respective window openings which after the magazine has been inserted into the apparatus, line up to enable a user to see the data storage units, if any, present in the magazine.

Preferably, the magazine is provided with retention means for individually holding each cartridge stored therein in position.

An embodiment of the invention in the form of a tape-cartridge magazine and tape read/write apparatus arranged to receive the magazine, will now be particularly described by way of example, with reference to the accompanying diagrammatic drawings, in which:

Figure I is a perspective view of the tape-cartridge magazine showing one cartridge positioned therein and another ready for insertion;

Figure 2 is a perspective view of the front of the read/write apparatus showing the loading of the magazine into the apparatus through an outwardly-opening door of the latter; and

Figures 3 and 4 are sectional views through the front portion of the read/write apparatus showing, in elevation and plan respectively, the arrangement of the door of the apparatus.

The tape-cartridge magazine I0 shown in Figure I is arranged to hold six tape cartridges which, for example, are of a form similar to that described in US-A 3 692 255.

The magazine I0 comprises an open-fronted housing provided on top with a carrying handle I2. The housing is made up of opposed side walls I3,I4 interconnected by a base I5 and top I6, and a rear wall I7 formed with a vertical window I8 extending the full height of the housing.

The side walls I3,I4 are internally provided with five pairs of horizontal ledges 2I which serve to

seat respective tape cartridges II, the housing base I5 seating a sixth cartridge II. The cartridges can be readily inserted and withdrawn from the housing by being slid in and out through the open front of the housing.

Spring elements 22 fixed to the housing side walls I3,I4 are arranged to engage corresponding recesses 23 in the sides of the cartridges II when the latter are fully inserted into the housing whereby to exert a small retention force lightly holding the cartridges in their fully-inserted positions.

The two side walls I3,I4 are externally formed with vertical guide channels 24 which are flared at their lower ends 25. The purpose of these channels 24 will be explained hereinafter.

When being used to carry one or more cartridges II, the magazine I0 is held by its handle I2 and depends vertically therefrom with the cartridges II substantially horizontal. In such a carrying position, the weight of the magazine and cartridges can be comfortably borne by the user.

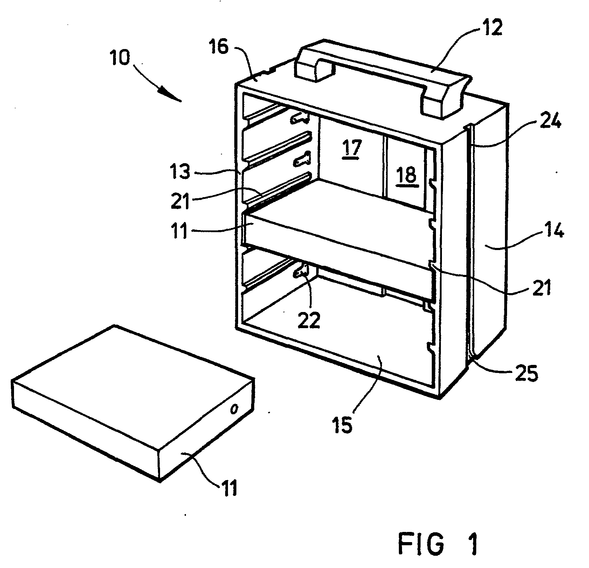

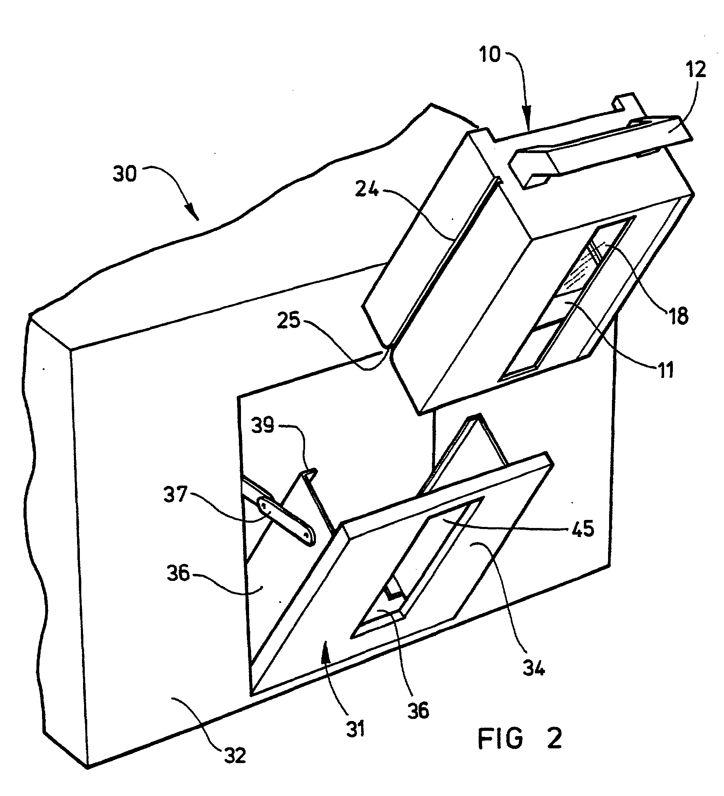

Figure 2 illustrates the loading of the magazine I0 into the tape read/write apparatus 30 through an outwardly-opening door 3I provided in the front wall of a casing 32 of the apparatus. The apparatus itself may, for example, be of the form described and illustrated in our copending International Patent Application WO-A 86/02192 in which a selector mechanism operates to withdraw a selected cartridge from the magazine and transport it to a read/write station of the apparatus. The selector mechanism and the read/write station form no part of the present invention and will therefore not be further described herein.

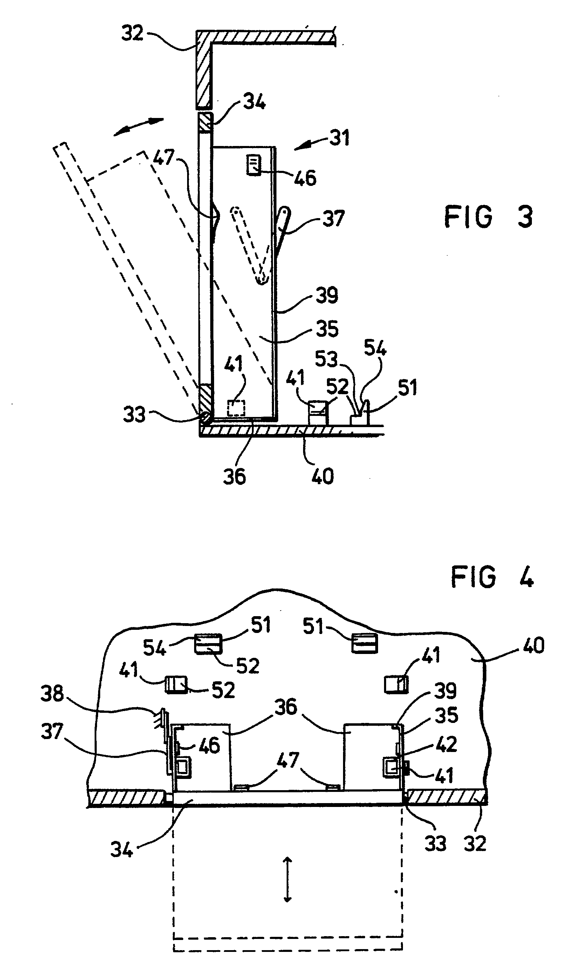

The structure of the door 3I is shown in Figures 3 and 4. The door 3I comprises a front panel 34 pivoted at its lower end about a horizontal shaft 33 mounted in the front wall of the casing 32. The door further comprises two side panels 35 extending rearwardly from the panel 34, and two corner base plates 36. The front panel 34 of the door 3I is formed with a window (see Figure 2).

When closed, the door 3I resides in an upright position flush with the rest of the front wall of the casing 32. A latch mechanism, not shown, is provided to latch the door 3I in its closed position. The door is moved to an open position by release of the latch mechanism followed by pivotal movement about the shaft 33, the limit of this movement (and thus the fully-open position of the door) being defined by a two-arm linkage 37 extending between the door 3I and a point 38 fixed relative to the apparatus casing 32. The open position of the door is shown in dashed lines in Figures 3 and 4.

The side panels 34 have their free, upright, edge portions 38 turned inwards to form guide elements for engaging corresponding ones of the guide channels 24 of the magazine I0.

A base member 40 of the apparatus casing mounts four locating stops 4I and two locating stops 5I. All six locating stops are machined with horizontal surfaces 52 which serve to seat the magazine after it has been loaded into the read/write apparatus and the door 3I closed. In order to permit the front two stops 4I to engage the magazine, the corner base plates 36 are formed with corresponding apertures 4I. A pair of spring elements 46 attached to the side panels 35 are arranged to engage the top side edges of the magazine I0 to apply a downwards force thereto whereby to hold the magazine down on the horizontal surfaces 52 of the locating stops 4I,5I; in this manner, the magazine is accurately located in the vertical direction after insertion into the apparatus.

Each of the locating stops 5I is also machined with a vertical surface 53 and a sloping lead-in surface 54 (see Figure 3). A second pair of spring elements 47 fixed to the front panel 34 of the door serve to urge the magazine away from the panel so that as the door is closed, the inward bottom edge of the magazine is pushed against the lead-in surfaces of the stops 5I and moves down these surfaces to locate against the surfaces 53. In this manner, the magazine is accurately located in a horizontal, inwards, direction.

The stops 4I may also be provided with lead-in surfaces to facilitate the sideways location of the magazine.

In use, to load the magazine into the read/write apparatus 30, the door 3I is moved into its open position illustrated in Figure 3. The magazine is then tilted from its normal carrying position to line up with the open door 3I (see Figure 2). Next, the magazine is lowered so as to engage the guide elements 39 of the door in the guide channels 24 formed in the side walls of the magazine, this engagement being facilitated by the flared lower ends 25 of the guide channels.

Upon engagement of the guide elements 39 in the channels 24, the magazine can be rapidly lowered down the back of the door to come to rest on the corner base plates 36 of the door. Thereafter, the door is closed bringing the magazine into an upright position in which it is seated on the locating stops 4I rather than the base plates 36. The spring elements 46 engage the top side edges of the magazine to hold it down on the horizontal surfaces 52 of the stops 4I,5I while the spring elements 47 locate the magazine against the vertical surfaces 53 of the stops 5I.

The rake of the handle I2 of the magazine I0 (see Figures I and 2) reduces the height of the door opening required to ensure unobstructed passage of the magazine into the apparatus upon closure of the door 3I.

The window 45 provided in the front panel 34 of the door 3I is so positioned as to line up with the window I8 in the magazine I0; as a result a user can see into the magazine from outside of the apparatus in order to ascertain how many cartridges II are present.

The described magazine can be provided with additional features as desired. Thus, a selectively-settable write-protect arrangement can be installed on the magazine to cooperate with complimentary means provided in the apparatus in order to prevent (either physically or otherwise) the writing of data to any of the cartridges stored in the magazine.

Although in the above-described embodiment the magazine 10 is arranged to hold tape cartridges in a horizontal attitude, it will be appreciated that other types of data storage units could equally well be held in the magazine in any appropriate orientation. Thus, for example, the magazine could be designed to hold optical storage discs positioned vertically.

## Claims

I. A magazine (l0) arranged to hold a plurality of data storage units (ll), the magazine (l0) comprising a housing (l3-l7) provided on top with a carrying handle (l2) in combination with an apparatus (30) arranged to receive the magazine (l0) with data storage units (ll) held therein and to write data to and/or read data from the data storage units, characterised in that the apparatus (30) includes a casing with an upright door (3l) arranged to tilt open outwardly by pivotal movement about a substantially horizontal axis lying in the region of the bottom of the door, the door (3l) when open permitting the magazine (l0) to be inserted down past the back of the door into the apparatus (30) after the magazine (l0) has first been tilted from its normal carrying orientation.

2. The combination set forth in claim I, wherein the casing door (3l) and the magazine housing (l3-l7) are provided with respective window openings (45,l8) which after the magazine (l0) has been inserted into the apparatus(30), line up to enable a user to see the data storage units, (ll) if any, present in the magazine.

3. The combination set forth in claim I or claim 2, wherein the casing door (3l) is rearwardly provided with guide elements (39) arranged to engage in guide channels (24,25) externally formed on opposite sides of the magazine housing, (l3,l7) the cooperation of the guide elements (39) and channels (24,25) serving to guide the magazine (l0) during its insertion into the apparatus(30).

4. The combination set forth in any one of the preceding claims, wherein the apparatus (30) is provided with fixed locating stops (4l,45) on which the magazine (l0) is arranged to seat after its insertion into the casing and closure of the casing door (3l).

5. The combination set forth in claim 4, wherein the apparatus (30) is provided with resilient means (46) arranged to apply a downwards force to the magazine (l0) whereby to hold the latter against said locating stops (4l,5l).

6. The combination set forth in any one of the preceding claims, wherein the apparatus (30) is provided with fixed stop means (53) for locating the magazine (l0) in an inwards direction of the apparatus upon closure of the casing door (3l), the apparatus being further provided with resilient (47) means arranged to urge the magazine (l0) against said stop means.

7. The combination set forth in any one of the preceding claims, wherein the magazine (l0) is provided with retention means (22) for individually holding each cartridge (ll) stored therein in position.

## Patentansprüche

1. Magazin (10) für die Aufnahme einer Vielzahl von Datenspeichereinheiten (11), wobei das Magazin (10) ein auf seiner Oberseite mit einem Traggriff (12) versehenes Gehäuse (13–17) besitzt, in Kombination mit einem Gerät (30) zur Aufnahme des Magazins (10) mit darin befindlichen Datenspeichereinheiten (11) zum Aufzeichnen von Daten in bzw. zum Auslesen von Daten aus den Datenspeichereinheiten, dadurch gekennzeichnet, daß das Gerät (30) ein Gehäuse mit einer senkrechten Tür (31) besitzt, die durch eine Schwenkbewegung über eine im wesentlichen horizontale, im Bereich der Türunterseite angeordnete Achse oben nach außen geschwenkt werden kann, so daß das Magazin (10), nachdem es gegenüber seiner normalen Tragposition gekippt wurde, durch die geöffnete Tür (31) entlang ihrer Rückseite nach unten in das Gerät (30) eingeführt werden kann.

2. Kombination gemäß Anspruch 1, dadurch gekennzeichnet, daß die Gehäusetür (31) und das Magazingehäuse (13–17) jeweils mit Fensteröffnungen (45, 18) versehen sind, die nach Einführen des Magazins (10) in das Gerät (30) fluchten, so daß der Benutzer die im Magazin vorhandenen Datenspeichereinheiten (11) sehen kann.

3. Kombination nach Anspruch 1 oder 2, dadurch gekennzeichnet, daß die Gehäusetür (31) an ihrer Rückseite mit Führungselementen (39) versehen ist, die in außen an gegenüberliegenden Seiten des Magazingehäuses (13, 17) angeordnete Führungsrillen (24, 25) eingreifen, so daß durch das Zusammenwirken der Führungselemente (39) und der Rillen (24, 25) das Magazin (10) während seiner Einführung in das Gerät (30) geführt ist.

4. Kombination nach einem der vorhergehenden Ansprüche, dadurch gekennzeichnet, daß das Gerät (30) mit feststehenden Positionieranschlägen (41, 45) versehen ist, an denen das Magazin (10) nach seiner Einführung in das Gehäuse und nach dem Schließen der Gehäusetür (31) anliegt.

5. Kombination nach Anspruch 4, dadurch gekennzeichnet, daß das Gerät (30) mit nachgiebigen Elementen (46) ausgestattet ist, die auf das Magazin (10) eine abwärts gerichtete Kraft ausüben, wodurch das Magazin in Anlage mit den Positionieranschlägen (41, 51) gehalten wird.

6. Kombination nach einem der vorhergehenden Ansprüche, dadurch gekennzeichnet, daß das Gerät (30) mit feststehenden Anschlägen (53) versehen ist, durch die das Magazin (10) beim Schließen der Gehäusetür (31) in Einwärtsrichtung des Gerätes positioniert wird, und daß das Gerät ferner mit nachgiebigen Elementen (47) ausgestattet ist, die das Magazin (10) gegen diese Anschlagelemente drücken.

7. Kombination nach einem der vorhergehenden Ansprüche, dadurch gekennzeichnet, daß das Magazin (10) mit Halteelementen (22) ausgestattet ist, die die einzelnen im Magazin aufgenommenen Kassetten (11) einzeln in ihrer Lage festhalten.

## Revendications

1. Un chargeur (10), conçu pour recevoir une pluralité d'unités e mémorisation de données (11), ce chargeur (10) comprenant un boîtier (13–17) pourvu à son sommet d'une poignée de transport (12), ce chargeur étant combiné à un appareil (30) conçu pour recevoir le chargeur (10) avec les unités de mémorisation de données (11) s'y trouvant et pour inscrire des données et/ou lire des données sur les unités de mémorisation de données, combinaison caractérisée en ce que l'appareil (30) comporte un coffret avec une porte verticale (31) pouvant s'ouvrir par basculement vers l'extérieur suivant un mouvement de pivotement autour d'un axe essentiellement horizontal situé dans la région inférieure de la porte, la porte (31) permettant, lorsqu'elle est ouverte, l'insertion, dirigée vers le bas, du chargeur (10) dans l'appareil (30) jusqu'au bas de la porte, après que le chargeur (10) ait été préalablement basculé par rapport à son orientation normale de transport.

2. La combinaison de la revendication 1, dans laquelle la porte (31) du coffret et le boîtier du chargeur (13–17) sont pourvus d'ouvertures respectives formant fenêtres (45, 48) qui, après que le chargeur (10) ait été inséré dans l'appareil (30), viennent en alignement pour permettre à un utilisateur de voir les unités de stockage des données (11) éventuellement présentes dans le chargeur.

3. La combinaison de l'une des revendications 1 ou 2, dans laquelle la porte du coffret (31) est pourvue en partie arrière d'éléments de guidage (39) conçus de manière à venir se loger dans des gorges de guidage (24, 25) formées à l'extérieur sur des faces opposées du boîtier du chargeur (13, 17), la coopération des éléments de guidage (39) et des gorges (24, 25) servant à guider le chargeur (10) lors de son insertion dans l'appareil (30).

4. La combinaison de l'une des revendications précédentes, dans laquelle l'appareil (30) est pourvu de butées de positionnement fixes (41, 45) sur lesquelles le chargeur (10) doit venir reposer après insertion dans le coffret et fermeture de la porte du coffret (31).

5. La combinaison de la revendication 4, dans laquelle l'appareil 30 est pourvu de moyens élastiques (46) conçus pour appliquer une force dirigée vers le bas au chargeur (10), afin de maintenir ce dernier contre lesdites butées de positionnement (41, 51).

6. La combinaison de l'une des revendications précédentes, dans laquelle l'appareil (30) est pourvu de moyens formant butées fixes (53) permettant de positionner le chargeur (10) dans une orientation tournée vers l'intérieur de l'appareil lors de la fermeture de la porte du coffret (31), l'appareil étant en outre pourvu de moyens élastiques (47) conçus pour appliquer le chargeur (10) contre ces moyens formant butées.

7. La combinaison de l'une des revendications précédentes, dans laquelle le chargeur (10) est pourvu de moyens de retenue (22) permettant de maintenir individuellement en position chaque cartouche (11) s'y trouvant.

10

16

12

24

13

17

21

18

11

14

22

21

15

25

11

FIG 1

FIG 2

EP 0 238 752 B1

FIG 3

FIG 4